# EUROPEAN PATENT SPECIFICATION

(11) **EP 2 095 201 B1**
(45) Date of publication and mention of the grant of the patent: **26.09.2012**
(21) Application number: 07857661.8
(22) Date of filing: 17.12.2007
(51) Int. Cl.: G05D 23/19, F24F 11/00, F25B 49/02, F25D 29/00

(54) **A COOLING DEVICE**
KÜHLVORRICHTUNG
DISPOSITIF DE REFROIDISSEMENT

(30) Priority: 22.12.2006 TR 200607359
(43) Date of publication of application: 02.09.2009
(73) Proprietor: Arçelik Anonim Sirketi, 34950 Istanbul (TR)
(72) Inventor: ERCIL, Yavuz, 34950 Istanbul (TR); ERENAY, Kerem, 34950 Istanbul (TR); DIRIL, Orhan, 34950 Istanbul (TR)
(86) International application number: PCT/EP2007/064028
(87) International publication number: WO 2008/077831

(56) References cited:
- EP-A- 0 572 149
- US-A1- 2005 040 247
- US-A1- 2006 185 373

## Description

The present invention relates to a cooling device comprising a control unit that drives the compressor.

The speed control of the variable speed compressor motors used in cooling devices is carried out by driver circuits.

The information relating to the speed at which the compressor motor should operate is attained from the temperature data. In state of the art, one of the methods for driving the compressor is by using the serial communication method in accordance with data received from various sensors which the compressor driver circuit utilizes for driving the compressor.

In this method, the cooling device temperature control unit, in accordance with environmental detections, transmits speed reference commands and status data to the driver circuit by serial communication. This communication is repeated periodically, for example every seven seconds.

Another method for driving the variable speed compressor motor is known as drop-in method. In this method, the on/off data received from the thermostats, also used in single speed compressors, is utilized by the driver circuit and the speed control of the compressor is maintained.

In cooling devices, the driver circuit can vary not only according to the configuration of the compressor to be driven but also according to the hardware whereby the temperature control is performed. Therefore, in cooling devices wherein the same compressor is used but when this compressor is desired to be driven by a different temperature control, then the driver circuit is changed.

In state of the art United States of America Patent Application No US2002117986, a main control circuit and the motor control circuit are connected with a serial communication link.
Document US2005040247, which is considered as the closest prior art, describes a programmable commercial thermostat for Heat Ventilation and Air Conditioning systems, HVAC, that is able to support both traditional staged and modulating outputs. Under staging conditions, traditional control algorithm techniques may be used to control the on/off control to the heating coils, cooling coils and fan. When used in a modulating configuration, special analogue driver circuits may allow the output from the thermostat to provide 4 to 20 mA and 2 to 10 V for direct interfacing for the control of modulated components. When the thermostat is operated in manual mode, the equipment is controlled manually via the communication port. Algorithmic control of the equipment is turned off. A group of thermostats may be connected to a common communications bus.
Motor drive control schemes for HVAC systems are also described in other documents, for example US2006185373 and EP0572149.

The object of the present invention is to design a cooling device that comprises a driver card suitable for different temperature control methods.

The cooling device designed to fulfill the objective of the present invention, described in the first claim and the respective claims thereof, comprises a driver card that can drive variable speed compressors either by drop-in method or by serial communication method.

With a single type driver card, the variable speed compressors that operate by both thermostat data with drop-in method or by temperature and speed data with serial communication method can be driven. Thus the driver card can be used with an electronic or electromechanical thermostat by both the serial communication control unit and also the drop-in control unit mounted thereon.

The present invention enables the use of a single type driver card in the production of cooling devices that operate with different control methods, which provides savings in both workmanship and time in production.

Furthermore, the driver card, since configured to accommodate for both of the different temperature controls, can be used in cooling devices wherein both types of temperature controls will be implemented, independently from the temperature control method of a single type compressor.

The cooling device designed to fulfill the objective of the present invention is illustrated in the attached figures, where:

Figure 1 - is the schematic view of the cooling device that comprises a compressor driven by drop-in control method.

Figure 2 - is the schematic view of the cooling device that comprises a compressor driven by serial communication control method.

The elements illustrated in the figures are numbered as follows:
1. Cooling device
2. Compressor
3. Driver card
4. Drop-in control unit
5. Serial communication control unit
6. Inlet port

The cooling device (1) comprises a variable speed compressor (2) that is controlled by drop-in method or by serial communication method and a driver card (3) that enables a variable speed compressor (2) to be driven by drop-in method or serial communication method.

The driver card (3) comprises a drop-in control unit (4) that evaluates the temperature data by drop-in method and a serial communication control unit (5) that evaluates the temperature and speed data by serial communication method. The driver card (3) drives the compressor (2) by only the drop-in control unit (4) or by the serial communication control unit (5) that is mounted thereon.

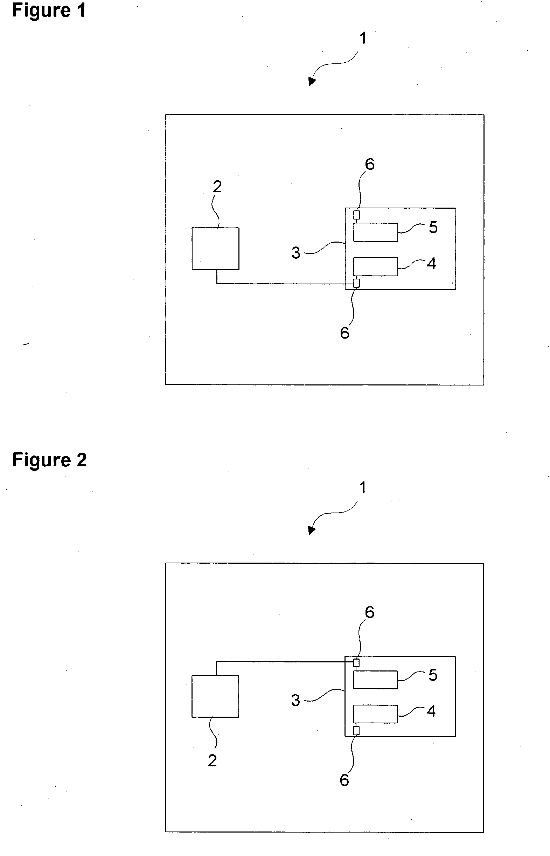

The drop-in control unit (4) detects whether the thermostat is on/off depending on the constant voltage or square wave transmitted by the electronic or electromechanical thermostats situated in the cooling device (1). The runtime rate {Ton-time / (Ton-time + Toff-time)} is detected depending on the period of being open (Ton-time) and the period of being closed (Toff-time) and the variable speed compressor (2) is controlled by the driver card (3) according to the speed identification algorithm (Figure 1).

The serial communication control unit (5) transmits to the driver card (3) the speed values at which the compressor (2) will operate in accordance with the data received from the temperature sensors disposed in the cooling device (1) and the variable speed compressor (2) is controlled by the driver card (3) (Figure 2).

The driver card (3) is an electronic circuit card having both the drop-in control unit (4) and the serial communication control unit (5) mounted thereupon. Only the related control unit (4 or 5) becomes active depending on the control method for operating the cooling device (1) and the compressor (2) is actuated accordingly.

Consequently, the single type variable speed compressors (2) that operate by different temperature control methods can be driven by only one driver card (3). The same driver card (3) enables the compressor (2) to run by both thermostat data with drop-in method or by temperature and speed data with serial communication method. Therefore the use of a single type driver card (3) provides convenience in production and savings of labor and time during the manufacture of two different types of cooling devices (1).

In another embodiment of the present invention, the driver card (3) comprises two inlet ports (6) that provide entry to both of the control units (4 and 5) mounted thereon. In this embodiment of the present invention, whether or not there is serial communication is controlled from the inlet ports (6) on the driver card (3) for a certain period of time (30 sec - 1 min) since serial communication can be detected in a shorter span of time. If there is serial communication in any one of the inlet ports (6), the hardware and software belonging to the drop-in control unit (4) thereon are deactivated and the compressor (2) is driven by the driver card (3) according to data received from the serial communication control unit (5) that is supplied with hardware and software adapted for serial communication method. If there is no serial communication for the specified time period in any one of the inlet ports (6), then the hardware and software of the serial communication control unit (5) are deactivated. Accordingly, the compressor (2) is driven by the driver card (3) according to data received from the drop-in control unit (4) supplied with hardware and software suitable for the drop-in method.

Consequently, the presence of serial communication is detected in the first 30 sec. to 1 min. after the driver card (3) is energized and accordingly the compressor (2) and hence the cooling device (1) can be controlled in accordance with one of the two control methods.

By means of the present invention, the driver card (3), being configured to accommodate for two different temperature control methods, can be conveniently used in cooling devices (1) wherein a different type of temperature control method will be implemented, independently of the temperature control method of the same type of compressor (2).

## Claims

1. A cooling device (1) comprising a variable speed compressor (2) that is controlled by drop-in method or serial communication method and **characterized by** a driver card (3) having a drop-in control unit (4) that evaluates the temperature data by drop-in method wherein the drop-in control unit (4) detects whether the thermostat is on/off depending on the constant voltage or square wave transmitted by the electronic or electromechanical thermostats situated in the cooling device (1) and having a serial communication control unit (5) that evaluates the temperature and speed data received by serial communication method wherein the serial communication control unit (5) transmits to the driver card (3) the speed values at which the compressor (2) will operate in accordance with the data received from the temperature sensors disposed in the cooling device (1) and wherein only the related control unit (4 or 5) becomes active depending on the control method for operating the cooling device (1).

2. A cooling device (1) as in Claim 1, **characterized by** a compressor (2) that is driven by only the drop-in control unit (4) or by the serial communication control unit (5).

3. A cooling device (1) as in Claim 1 or 2, **characterized by** a driver card (3) comprising two inlet ports (6) that provide the entry to both of the control units (4 and 5) mounted thereon.

4. A cooling device (1) as in any one of the above claims, **characterized by** a driver card (3) that controls for a certain period of time whether or not there is serial communication from the inlet ports (6) thereon and if there is serial communication in any one of the inlet ports (6), the hardware and software belonging to the drop-in control unit (4) are deactivated and the compressor (2) is driven according to data received from the serial communication control unit (5) that is supplied with hardware and software adapted for serial communication method.

5. A cooling device (1) as in any one of the Claims 1, 2 or 3, **characterized by** a driver card (3) that deactivates the hardware and software of the serial communication control unit (5) if there is no serial communication for the specified time period in any one of the inlet ports (6) and drives the compressor (2) according to data received from the drop-in control unit (4) supplied with hardware and software suitable for drop-in method.

## Patentansprüche

1. Kühlvorrichtung (1), umfassend einen Kompressor mit variabler Drehzahl (2), der durch ein Drop-in-Verfahren oder ein serielles Kommunikationsverfahren gesteuert wird, und **gekennzeichnet durch** eine Treiberkarte (3) mit einer Drop-in-Steuereinheit (4), die die Temperaturdaten im Drop-in-Verfahren bewertet, wobei die Drop-in-Steuereinheit (4) abhängig von der konstanten Spannung oder Rechteckspannung, die von den elektronischen oder elektromechanischen Thermostaten in der Kühlvorrichtung (1) übertragen wird, erkennt, ob das Thermostat ein-/ausgeschaltet ist, und aufweisend eine serielle Kommunikationssteuereinheit (5), die die Temperatur- und die Drehzahldaten, die durch das serielle Kommunikationsverfahren empfangen werden, bewertet, wobei die serielle Kommunikationssteuereinheit (5) die Drehzahlwerte, bei denen der Kompressor (2) gemäß den von den Temperatursensoren, die in der Kühlvorrichtung (1) angeordnet sind, empfangenen Daten arbeitet, an die Treiberkarte (3) überträgt, und wobei nur die zugehörige Steuereinheit (4 oder 5) abhängig vom Steuerverfahren zum Betreiben der Kühlvorrichtung (1) aktiviert wird.

2. Kühlvorrichtung (1) nach Anspruch 1, **gekennzeichnet durch** einen Kompressor (2), der nur **durch** die Drop-in-Steuereinheit (4) oder **durch** die serielle Kommunikationssteuereinheit (5) angetrieben wird.

3. Kühlvorrichtung (1) nach Anspruch 1 oder 2, **gekennzeichnet durch** eine Treiberkarte (3), die zwei Einlassanschlüsse (6) umfasst, die den Zugang zu beiden daran angebrachten Steuereinheiten (4 und 5) bieten.

4. Kühlvorrichtung (1) nach einem der vorangehenden Ansprüche, **gekennzeichnet durch** eine Treiberkarte (3), die für einen bestimmten Zeitraum steuert, ob serielle Kommunikation von den Einlassanschlüssen (6) daran vorliegt, wobei dann, wenn an einem der Einlassanschlüsse (6) serielle Kommunikation vorliegt, die Hardware und Software, die zu der Drop-in-Steuereinheit (4) gehören, deaktiviert werden, und der Kompressor (2) gemäß den Daten betrieben wird, die von der seriellen Kommunikationssteuereinheit (5) empfangen werden, welche mit Hardware und Software ausgerüstet ist, die für das serielle Kommunikationsverfahren ausgelegt sind.

5. Kühlvorrichtung (1) nach einem der Ansprüche 1, 2 oder 3, **gekennzeichnet durch** eine Treiberkarte (3), die die Hardware und Software der seriellen Kommunikationssteuereinheit (5) deaktiviert, wenn an keinem der Einlassanschlüsse (6) für den bestimmten Zeitraum serielle Kommunikation vorliegt, und den Kompressor (2) gemäß den Daten antreibt, die von der Drop-in-Steuereinheit (4) empfangen werden, welche mit Hardware und Software ausgerüstet ist, die für das Drop-in-Verfahren geeignet ist.

## Revendications

1. Un dispositif de refroidissement (1) comprenant un compresseur à vitesse variable (2) qui est commandé par la méthode « drop-in » ou la méthode de communication série et **caractérisé par** une carte d'entraînement (3) qui a une unité de commande « drop-in » (4) qui évalue les données de température par la méthode de « drop-in » où l'unité de commande « drop-in » (4) détecte si le thermostat est allumé / éteint selon la tension constante ou à onde carrée transmise par les thermostats électroniques ou électromécaniques situés dans le dispositif de refroidissement (1) et qui a une unité de commande de communication série (5) qui évalue les données de température et de vitesse reçues par la méthode de communication série où l'unité de commande de communication série (5) transmet à la carte d'entraînement (3) les valeurs de vitesse auxquelles le compresseur (2) fonctionne en conformité avec les données reçues des capteurs de température disposés dans le dispositif de refroidissement (1) et où seulement l'unité de commande (4 ou 5) rapportée devient active selon la méthode de commande pour l'opération du dispositif de refroidissement (1).

2. Un dispositif de refroidissement (1) selon la Revendication 1, **caractérisé par** un compresseur (2) qui est entraîné par seulement l'unité de commande « drop-in » (4) ou l'unité de commande de communication série (5).

3. Un dispositif de refroidissement (1) selon la Revendication 1 ou 2, **caractérisé par** une carte d'entraînement (3) comprenant deux ports d'entrée (6) qui permettent l'entrée dans les deux unités de commande (4 et 5) montées sur celle-ci.

4. Un dispositif de refroidissement (1) selon l'une quelconque des revendications précédentes, **caractérisé par** une carte d'entraînement (3) qui contrôle pendant une certaine période de temps si ou non il y a une communication série aux ports d'entrée (6) situés sur celle-ci, et si il y a une communication série à l'une quelconque des ports d'entrée (6), si ou non le matériel et le logiciel appartenant à l'unité de commande « drop-in » (4) sont désactivés et le compresseur (2) est entraîné selon les données reçues de l'unité de commande de communication série (5) qui sont fournies avec le matériel et le logiciel adaptés pour la méthode de communication série.

5. Un dispositif de refroidissement (1) selon l'une quelconque des revendications 1, 2 ou 3, **caractérisé par** une carte d'entraînement (3) qui désactive le matériel et le logiciel de l'unité de commande de communication série (5) si il n'y a pas de communication série à l'une quelconque des ports d'entrée (6) pour la période spécifiée et qui entraîne le compresseur (2) selon les données reçues de l'unité de commande « drop-in » (4) fournies avec le matériel et le logiciel appropriés pour la méthode « drop-in ».
